# EUROPÄISCHE PATENTANMELDUNG

(11) **EP 2 141 513 A2**
(43) Veröffentlichungstag der Anmeldung: **06.01.2010**
(21) Anmeldenummer: 09159596.7
(22) Anmeldetag: 07.05.2009
(51) Int. Cl.: G01T 1/29

(54) **Vorrichtung und Verfahren zur Vermessung eines Strahlflecks eines Partikelstrahls sowie Anlage zur Erzeugung eines Partikelstrahls**

(30) Priorität: 23.06.2008 DE 102008029609
(71) Anmelder: Siemens AG, Wittelsbacher Platz 2 80333 München (DE)
(72) Erfinder: Rietzel, Eike, 64289, Darmstadt (DE)

(57) **Zusammenfassung**

Vorrichtung und Verfahren zur Vermessung eines Strahlflecks eines Partikelstrahls sowie Anlage zur Erzeugung eines Partikelstrahls

Die Erfindung betrifft eine Vorrichtung zur Vermessung eines Strahlflecks (37) eines Partikelstrahls, umfassend eine Einrichtung (31, 49), mit der Projektionen des Strahlflecks (37) auf eine Vielzahl von Richtungen (38, 40, 42, 44), die insbesondere im Wesentlichen senkrecht zu einer Verlaufsrichtung des Partikelstrahls stehen, erfassbar sind, und eine Auswertungseinheit (47), mit der aus den erfassten Projektionen ein zweidimensionales Querschnittsprofil des Partikelstrahls rekonstruierbar ist. Weiterhin umfasst die Erfindung ein entsprechendes Verfahren. Weiterhin umfasst die Erfindung eine Anlage zur Erzeugung eines Partikelstrahls mit einer derartigen Vorrichtung.

## Beschreibung

Die Erfindung betrifft eine Vorrichtung und ein Verfahren zur Vermessung eines Strahlflecks eines Partikelstrahls sowie eine Anlage zur Erzeugung eines Partikelstrahls mit einer derartigen Vorrichtung. Die Erfindung findet Einsatz insbesondere in der Partikeltherapie, bei der ein Querschnittsprofil eines Partikelstrahls vermessen wird.

Die Partikeltherapie ist ein etabliertes Verfahren zur Behandlung von Gewebe, insbesondere von Tumorerkrankungen. Bestrahlungsverfahren, wie sie in der Partikeltherapie eingesetzt werden, finden jedoch auch in nicht-therapeutischen Gebieten Anwendung. Hierzu gehören beispielsweise Forschungsarbeiten im Rahmen der Partikeltherapie, die an nicht-lebenden Phantomen oder Körpern durchgeführt werden, Bestrahlungen von Materialien, etc. Hierbei werden geladene Partikel wie z.B. Protonen oder Kohlenstoffionen oder andere Ionensorten auf hohe Energien beschleunigt, zu einem Partikelstrahl geformt und über ein Hochenergiestrahltransportsystem zu einem oder mehreren Bestrahlungsräumen geführt. In einem dieser Bestrahlungsräume wird das zu bestrahlende Objekt mit dem Partikelstrahl bestrahlt.

Der Partikelstrahl ist durch verschiedene Parameter charakterisiert. Hierzu gehören z.B. die Position und die Energie des Partikelstrahls. Neben diesen Parametern spielt auch die Strahlbreite - auch als Strahlfokus bezeichnet - eine wichtige Rolle.

Bei einer Bestrahlung wird oftmals in idealisierter Weise die Teilchenverteilung innerhalb des zweidimensionalen Querschnittsprofils - auch als Strahlfleck bezeichnet - als gaußförmig angenommen. Wenn der Strahlfleck zu stark von der Gaußform abweicht, kann dies entscheidend für die insgesamt applizierte Dosisverteilung sein. Auch bei nicht gaußförmigen Strahlflecken, die auch in unterschiedlichen Richtungen verschiedene Ausdehnungen aufweisen können, sind die Annahmen über den Strahlfleck entscheidend für die applizierte Dosisverteilung. Es ist daher notwendig, den Strahlfleck eines Partikelstrahls genau zu vermessen. Dies kann beispielsweise in routinemäßig durchgeführten Qualitätssicherungsmaßnahmen geschehen

Zur Vermessung des Strahlfleck - und damit verbunden die Messung der Strahlbreite - werden heute üblicherweise radiographischen Filme verwendet. Der Film wird mit dem Partikelstrahl bestrahlt und anschließend das durch den Film registrierte Muster ausgewertet. Dieses Verfahren ist jedoch vergleichsweise zeit- und kostenaufwändig.

Weiterhin ist die Möglichkeit bekannt, zur Vermessung der Strahlbreite so genannte Vieldraht-Proportionalkammern (auch als MWPC bezeichnet für engl.: "Multi-wire proportional chamber") einzusetzen. In einer derartigen Kammer ist üblicherweise eine Vielzahl von zueinander parallelen Drähten angeordnet. Diejenigen Drähte, die parallel zu einer Richtung angeordnet sind, erlauben es, die Projektion des Strahlflecks auf eine hierzu senkrechte Richtung zu vermessen. In einer MWPC sind oftmals zwei Gruppen von parallelen Drähten angeordnet sind, die senkrecht zueinander stehen. Hierdurch kann der Strahlfleck bezüglich seiner Projektion auf diese zwei Richtungen vermessen werden.

Weiterhin ist die Möglichkeit bekannt, Leuchtschirme zur Vermessung des Strahlflecks zu verwenden. Der Strahlfleck kann dann direkt zweidimensional gemessen werden. Für eine quantitative Auswertung besteht hier jedoch der Nachteil, dass das Licht aus der Umgebung die Messungen stört. Daher muss zumindest das aus Kamera und Leuchtschirm bestehende System oder sogar der ganze Raum abgedunkelt werden.

Es ist daher die Aufgabe der Erfindung, eine Vorrichtung und ein Verfahren anzugeben, mit welchen ein Strahlfleck eines Partikelstrahls auf einfache Weise schnell und genau vermessen werden kann. Weiterhin ist es die Aufgabe der Erfindung eine Anlage zur Erzeugung eines Partikelstrahls bereitzustellen, in der ein Strahlfleck des Partikelstrahls auf einfache Weise schnell und genau vermessen werden kann.

Die Aufgabe wird gelöst durch eine Vorrichtung gemäß Anspruch 1, durch eine Anlage gemäß Anspruch 5 sowie durch ein Verfahren gemäß Anspruch 8. Vorteilhafte Weiterbildungen finden sich in den Merkmalen der abhängigen Ansprüche.

Die erfindungsgemäße Vorrichtung zur Vermessung eines Strahlflecks eines Partikelstrahls umfasst:
- eine Einrichtung, mit der Projektionen des Strahlflecks auf eine Vielzahl von Richtungen erfassbar sind, und
- eine Auswertungseinheit, mit der aus den erfassten Projektionen ein zweidimensionales Querschnittsprofil des Partikelstrahls rekonstruierbar ist.

Mit der Einrichtung können Messdaten gewonnen werden, die jeweils die Projektion des Strahlflecks auf eine der Richtungen kennzeichnen. Dadurch, dass eine Vielzahl von Messdaten gewonnen wird, die die Projektion des Strahlflecks auf die vielen unterschiedlichen Richtungen charakterisieren, ist es möglich, aus der Vielzahl der Messdaten das zweidimensionale Querschnittsprofil des Partikelstrahls zu rekonstruieren. Die Form des Strahlflecks als zweidimensionale Verteilung kann dadurch ermittelt werden.

Die Richtungen stehen im Wesentlichen senkrecht zu der Verlaufsrichtung des Partikelstrahls. Üblicherweise stehen die Richtungen senkrecht zur Verlaufsrichtung, es können aber auch spitze/stumpfe Winkel zur Verlaufsrichtung gewählt werden. In diesem Fall wird das Querschnittsprofil des Partikelstrahls etwas "verzerrt" gemessen.

Zur Rekonstruktion des zweidimensionalen Querschnittsprofils des Partikelstrahls können verschiedene Verfahren eingesetzt werden. Analoge Verfahren sind beispielsweise bei der Computertomographie bekannt, bei der ebenfalls aus einer Vielzahl von eindimensionalen Projektionen ein zweidimensionales Bild rekonstruiert wird. Beispielhaft seien die Fourier-Rekonstruktion, die Rückprojektion oder die gefilterte Rückprojektion genannt.

Je mehr Projektionen aus unterschiedlichen Richtungen des Strahlflecks erfasst worden sind, desto genauer kann der Strahlfleck rekonstruiert werden. Eine ungefähre, rudimentäre Rekonstruktion des Strahlflecks ist bereits ab 4 Projektionen aus unterschiedlichen Richtungen möglich, mit Vorteil werden jedoch mehr Projektionen, wie beispielsweise mehr als 8, mehr als 10, mehr als 20, oder gar mehr als 40 Projektionen verwendet. Idealerweise decken die Projektionen in unterschiedlichen Richtungen den gesamten Winkelbereich von 360° um die Strahlverlaufsrichtung ab.

Vorteil dieser Vorrichtung ist es, dass Messdaten der Vorrichtung z.B. elektronisch gewonnen und sofort weiterverarbeitet werden können, um Informationen über den Strahlfleck - d.h. über das zweidimensionale Querschnittsprofil des Partikelstrahls - zu erhalten, ohne dass Filme zuerst entwickelt und ausgewertet werden müssen oder dass auf einem Leuchtschirm erzeugte Profil erst digitalisiert und dann ausgewertet werden muss.

In vorteilhafter Weise ist die Vorrichtung derart ausgebildet, dass mit der Einrichtung die Projektionen des Strahlflecks zeitaufgelöst erfasst werden können. Hierdurch lassen sich bei der Vermessung des Strahlflecks auch mögliche Änderungen des Querschnittsprofils über die Zeit erfassen. Dies ist z.B. bei einer Anlage wie einer Partikeltherapieanlage vorteilhaft, bei der ein Partikelstrahl aus einer Beschleunigereinheit extrahiert wird und dessen Spezifikationsparameter einen zeitlichen Verlauf aufweisen können, z.B. aufgrund kleiner Änderungen der Beschleunigereinstellung während der Extraktion oder aufgrund des Extraktionsverfahrens selbst. Bei filmbasierten Messungen ist eine zeitliche Auflösung falls überhaupt nur sehr schwer zu realisieren.

In einer vorteilhaften Ausführungsform ist die Einrichtung, mit der die Projektionen des Strahlflecks erfasst werden, um die Strahlverlaufsrichtung drehbar gelagert. Auf diese Weise kann auch eine Einrichtung eingesetzt werden, die die Erfassung einer Projektion des Strahlflecks auf lediglich eine oder auf lediglich wenige Richtungen ermöglicht. Üblicherweise wird bei der Drehung der Einrichtung um die Strahlverlaufsrichtung eine Drehachse verwendet werden, die der Verlaufsrichtung des Partikelstrahls entspricht. Auf diese Weise projiziert der Partikelstrahl bei der Drehung stets an die gleiche Stelle der Einrichtung. Dies ist jedoch nicht zwingend notwendig, es sind auch andere, exzentrische Drehbewegungen, elliptische Drehbewegungen etc. möglich. Auch hier wird eine Drehung der Einrichtung um die Strahlverlaufsrichtung erreicht.

Eine derartige Einrichtung ist beispielsweise eine Drahtkammer, wie sie in bekannter Weise zur ortsaufgelösten Detektion von ionisierender Strahlung eingesetzt werden. Eine Verwendung von Streifenkammern ist ebenso denkbar. Während eine räumlich stationäre Drahtkammer oder Streifenkammer den Strahlfleck lediglich in einer bzw. zwei Projektionen vermessen kann, erlaubt eine um den Partikelstrahl drehbar gelagerte Draht- bzw. Streifenkammer die Detektion des Strahlprofils auf beliebig viele Richtungen. Zudem erlaubt eine Drahtkammer oder eine Streifenkammer die elektronische Erfassung der Messdaten. Es ist aber auch der Einsatz einer Drahtkammer oder Streifenkammer möglich, die im stationären Zustand die Projektion des Strahlflecks auf drei, vier oder mehreren Richtungen erlaubt, indem die Drahtkammer beispielsweise drei, vier oder mehrere Drahtrichtungen aufweist.

Es ist aber auch möglich, mehrere Messvorrichtungen hintereinander anzuordnen, wobei durch die Vielzahl der Messvorrichtungen die Vielzahl der Projektionen auf unterschiedliche Richtungen erfasst werden kann. Beispielsweise ist es möglich, mehrere verdreht zueinander, hintereinander angeordnete Messvorrichtungen wie Drahtkammern oder Streifenkammern zu verwenden, die gegebenenfalls auch alle gemeinsam drehbar gelagert sein können.

Die Vorrichtung zur Vermessung des Strahlflecks kann vorteilhafterweise Teil einer Anlage zur Erzeugung eines Partikelstrahls sein, wie beispielsweise eine Partikeltherapieanlage. Insbesondere bei routinemäßig durchzuführenden Qualitätssicherungsmaßnahmen kann die Vorrichtung zur Vermessung eines Strahlflecks einen deutlichen Zeit- und Kostenvorteil darstellen.

Die Anlage kann eine Steuervorrichtung aufweisen, mit der die Erzeugung des Partikelstrahls und gegebenenfalls der Verlauf einer Bestrahlung mit dem Partikelstrahl gesteuert wird. Die Steuerung der Anlage ist vorteilhafterweise mit der Steuerung der Vorrichtung zur Vermessung eines Strahlflecks zeitlich synchronisiert. Auf diese Weise lässt sich erreichen, dass die Drehung einer drehbar gelagerten Vorrichtung automatisch und/oder synchronisiert zur Anforderung verschiedener Partikelstrahlen mit unterschiedlichen Spezifikationen abläuft.

Durch die zeitliche Synchronisation lassen sich auch mögliche Änderungen des Strahlflecks über die Zeitdauer, während der der Partikelstrahl aktiv ist, berücksichtigen. Beispielsweise können die Messungen durch ein Strahlanforderungssignal getriggert werden und mit dem Bestrahlungsverlauf korreliert werden.

Teilweise kommt es vor, dass der Partikelstrahl seine Form während einer Strahlextraktion, die z.B. mehrere Sekunden dauern kann, verändert. Sollten diese Änderungen so schnell verlaufen, dass nicht alle Projektionen zur Ermittlung des Strahlflecks zu einem bestimmten Zeitpunkt in der gewünschten Genauigkeit erfasst werden können, kann mit folgendem Verfahren der Strahlfleck dennoch in gewünschter Genauigkeit und Zeitauflösung erfasst werden:
Die zeitlichen Änderungen des Partikelstrahls sind üblicherweise von Extraktion zu Extraktion in etwa gleich. Während mehrerer Extraktionen werden jeweils zu entsprechenden Zeitpunkten unterschiedliche Projektionen aufgezeichnet, so lange, bis alle zur Rekonstruktion notwendigen Projektionen, die zu einem Zeitpunkt im Extraktionsverlauf gehören, aufgezeichnet sind.
Auf diese Weise kann während einer Strahlextraktion zu eindeutig festgelegten Zeiträumen innerhalb der Extraktion über kleine Zeiträume mehrfach, also quasi kontinuierlich, gemessen werden. Bei der Aufzeichnung der Projektionen kann hierfür z.B. jede Projektion mit einem Zeitstempel versehen werden, der den Zeitpunkt im Extraktionsverlauf kennzeichnet, an dem die Projektion aufgezeichnet wurde. Bei einer nachfolgenden Rekonstruktion kann dieser Zeitstempel dazu verwendet werden, die Projektionen zu sortieren.
Insbesondere in einer Partikeltherapieanlage kann eine derartige Vorrichtung eingesetzt werden zur routinemäßigen Durchführung von Qualitätssicherungsmaßnahmen.
Das erfindungsgemäße Verfahren zur Vermessung eines Strahlflecks eines Partikelstrahls umfasst folgende Schritte:
   - Erfassen von Projektionen des Strahlflecks auf eine Vielzahl von Richtungen, die insbesondere im Wesentlichen senkrecht zu einer Verlaufsrichtung des Partikelstrahls stehen, und
   - Rekonstruieren eines zweidimensionalen Querschnittsprofils des Partikelstrahls aus den erfassten Projektionen.

Wie bei der Vorrichtung können bei dem Verfahren die Projektionen zeitaufgelöst erfasst werden. In besonders vorteilhafter Weise werden die Projektionen mit einer um die Strahlverlaufsrichtung drehbar gelagerten Einrichtung, z.B. mit einer Drahtkammer oder Streifenkammer, erfasst. Auch hier kann die Erfassung der Projektionen zeitlich mit der Anforderung des Partikelstrahls bzw. mit dem Verlauf einer Bestrahlung mit dem Partikelstrahl abgestimmt werden.

Bei Ausführungsformen der Erfindung entfallen im Gegensatz zu Filmmessungen mitunter lange Nachbearbeitungszeiten für Entwicklung und Einscannen der Filme. Außerdem muss für jede Messung der Film verschoben, ersetzt oder zumindest an einer anderen Stelle bestrahlt werden. Bei einer großen Anzahl an Messungen ist dies sehr zeitaufwändig. Außerdem ist mittels Filmen eine zeitaufgelöste Messung, z.B. über eine Extraktionsdauer des Partikelstrahls, nicht oder nur mit hohem Aufwand möglich.

Ausführungsformen der Erfindung weisen auch gegenüber dem Einsatz von Leuchtschirmen einen Vorteil auf, da bei Leuchtschirmen unter anderem eine kleinste bzw. größte Intensität vorgegeben ist, bei der entweder kein ausreichendes Signal bzw. eine Sättigung auftritt. Mit einer Vorrichtung, bei der lediglich Projektionen des Partikelstrahls in einer Richtung erfasst werden, wie beispielsweise mit Drahtkammern, kann ein wesentlich größerer dynamischer Bereich vermessen werden, z.B. durch geeignete Einstellung der Verstärkung der Messsignale, etc. Auch lassen sich mit einer derartigen Vorrichtung Messungen unterhalb des Millisekunden-Bereichs ermöglichen, was eine hohe zeitliche Auflösung ermöglicht, die bei Kamerasystemen nur schwierig oder zumindest mit hohem Kostenaufwand zu erreichen ist.

Ausführungsformen der Erfindung mit vorteilhaften Weiterbildungen gemäß den Merkmalen der abhängigen Ansprüche werden anhand der folgenden Zeichnung näher erläutert, ohne jedoch darauf beschränkt zu sein. Es zeigen:
- Fig. 1: einen schematischen Überblick über eine Partikeltherapieanlage,
- Fig. 2: eine als Vieldraht-Proportionalkammer ausgebildete Vorrichtung, die drehbar um die Verlaufsrichtung des Partikelstrahls gelagert ist, in einer ersten Rotationsstellung,
- Fig. 3: eine ebensolche Vieldraht-Proportionalkammer in einer zweiten Rotationsstellung,
- Fig. 4: eine schematische Darstellung verschiedener Verfahrensschritte einer Ausführungsform des Verfahrens

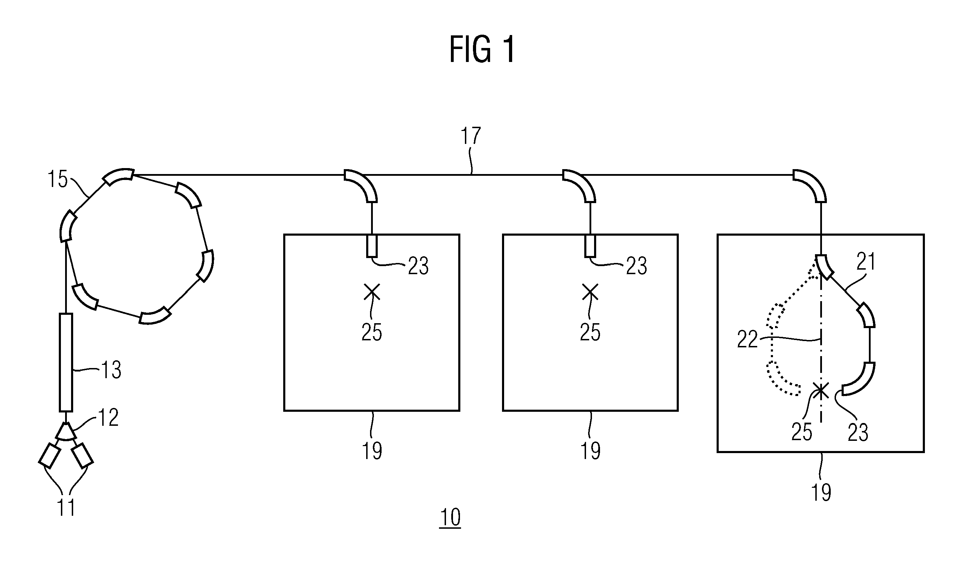

Figur 1 zeigt einen schematischen Überblick über den Aufbau einer Partikeltherapieanlage 10. In einer Partikeltherapieanlage 10 erfolgt insbesondere eine Bestrahlung eines Körpers, insbesondere eines tumorerkrankten Gewebes, mit einem Partikelstrahl.

Als Partikel werden vornehmlich Ionen wie beispielsweise Protonen, Pionen, Heliumionen, Kohlenstoffionen oder andere Ionensorten eingesetzt. Üblicherweise werden derartige Partikel in einer Partikelquelle 11 erzeugt. Wenn, wie in Figur 1 dargestellt, zwei Partikelquellen 11 vorhanden sind, die zwei verschiedene Ionensorten erzeugen, kann zwischen diesen beiden Ionensorten innerhalb eines kurzen Zeitintervalls umgeschaltet werden. Dazu wird beispielsweise ein Schaltmagnet 12 verwendet, der zwischen den Ionenquellen 11 einerseits und einem Vorbeschleuniger 13 andererseits angeordnet ist. Z.B. kann hierdurch die Partikeltherapieanlage 10 mit Protonen und mit Kohlenstoffionen gleichzeitig betrieben werden.

Die von der oder einer der Ionenquellen 11 erzeugten und gegebenenfalls mit dem Schaltmagneten 12 ausgewählten Ionen werden in dem Vorbeschleuniger 13 auf ein erstes Energieniveau beschleunigt. Der Vorbeschleuniger 13 ist beispielsweise ein Linearbeschleuniger (LINAC für engl.: "LINear ACcelerator"). Anschließend werden die Partikel in einen Beschleuniger 15, beispielsweise ein Synchrotron oder Zyklotron, eingespeist. In dem Beschleuniger 15 werden sie auf hohe Energien, wie sie zur Bestrahlung nötig sind, beschleunigt. Nachdem die Partikel den Beschleuniger 15 verlassen, führt ein Hochenergiestrahl-Transportsystem 17 den Partikelstrahl zu einem oder mehreren Bestrahlungsräumen 19. In einem Bestrahlungsraum 19 werden die beschleunigten Partikel auf einen zu bestrahlenden Körper gerichtet. Je nach Ausgestaltung erfolgt dies von einer festen Richtung (in so genannten "fixed beam"-Räumen) aus oder aber über eine um eine Achse 22 bewegliche rotierbare Gantry 21 von verschiedenen Richtungen aus.

Im Bestrahlungsraum 19 tritt der Partikelstrahl aus einem Strahlauslass 23 aus und trifft auf ein zu bestrahlendes Zielvolumen, das sich üblicherweise im Isozentrum 25 eines Bestrahlungsraums befindet.

Der anhand der Figur 1 dargestellte Grundaufbau einer Partikeltherapieanlage 10 ist beispielhaft für Partikeltherapieanlagen, kann aber auch hiervon abweichen.

Die nachfolgend beschriebenen Ausführungsbeispiele sind sowohl im Zusammenhang mit der anhand von Fig. 1 dargestellten Partikeltherapieanlage als auch mit anderen Partikeltherapieanlagen oder allgemein in Anlagen, in denen Partikel beschleunigt und zu einem Strahl geformt werden, dessen Strahlfleck vermessen werden soll.

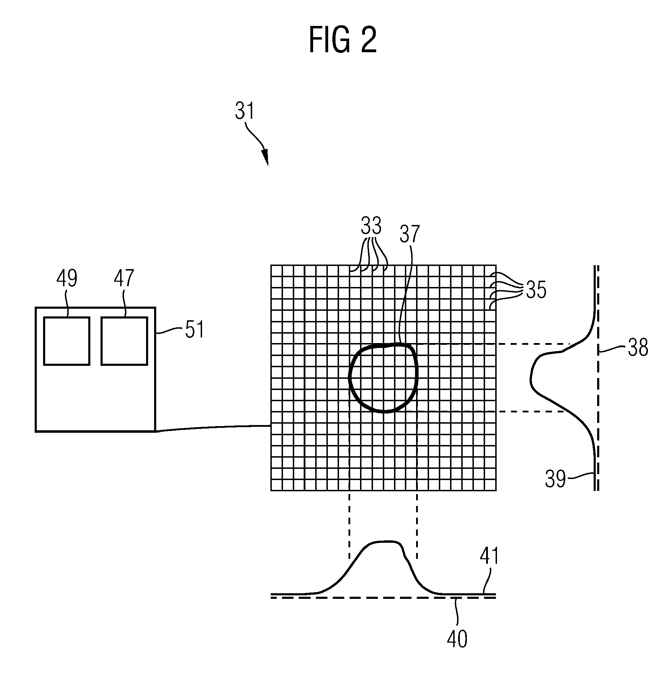

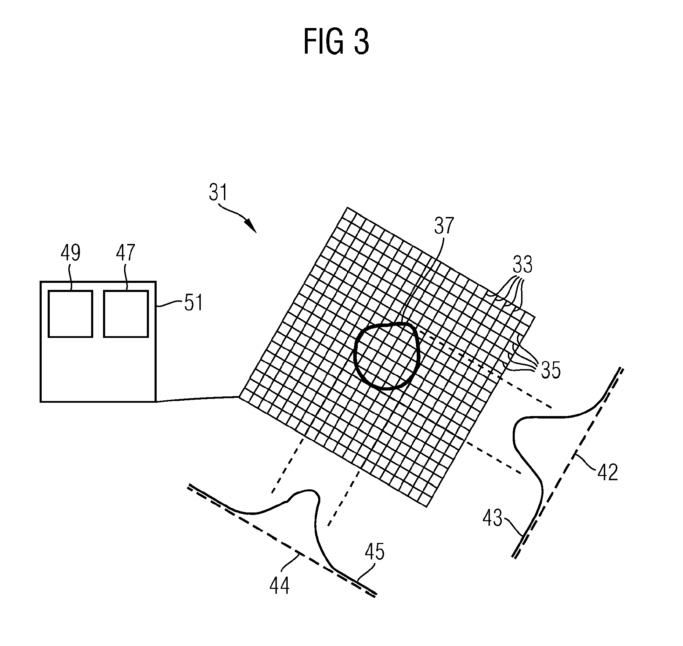

Fig. 2 und Fig. 3 zeigen jeweils eine als Vieldraht-Proportionalkammer 31 ausgebildete Vorrichtung, wobei die Vieldraht-Proportionalkammer 31 in Fig. 3 gegenüber Fig. 2 um 30° rotiert ist. Die Darstellung der Vieldraht-Proportionalkammer 31 ist lediglich eine schematische Darstellung, anhand derer die zu Grunde liegenden Ideen illustriert werden können.

Die Vieldraht-Proportionalkammer 31 umfasst in diesem Fall eine erste Gruppe 33 und eine zweite Gruppe 35 mit jeweils einer Vielzahl von parallelen Drähten. Die Drähte der ersten Gruppe 33 stehen dabei senkrecht zu den Drähten der zweiten Gruppe 35.

Die Vieldraht-Proportionalkammer 31 wird dabei in den Strahlverlauf des Partikelstrahls gebracht, so dass der Partikelstrahl senkrecht auf die Vieldraht-Proportionalkammer 31 trifft. Hierdurch kann das Querschnittsprofil des Partikelstrahls, d.h. der Strahlfleck 37 mit der Vieldraht-Proportionalkammer 31 vermessen werden.

Mit den Drähten einer der beiden Gruppen 33, 35 lassen sich z.B. Messdaten erhalten, die die Projektion des Strahlflecks 37 auf eine Richtung, die senkrecht zu dieser Draht-Verlaufsrichtung ist, kennzeichnet. Verschiedene Projektionsrichtungen sind in Fig. 2. und Fig. 3 mit jeweils einer gepunkteten Linie 38, 40, 42, 44 dargestellt.

In Fig. 2 und Fig. 3 sind die Messdaten jeweils durch eine leicht verzerrt dargestellte Gausskurve 39, 41, 43, 45 über den gepunkteten Linien 38, 40, 42, 44 symbolisiert. Diese Gausskurven 39, 41, 43, 45 symbolisieren z.B. die unterschiedlichen Ladungen, die in den einzelnen Drähten der Vieldraht-Proportionalkammer 31 durch die Bestrahlung mit dem Partikelstrahl erzeugt und gemessen werden, und aus denen auf das Querschnittsprofil des Partikelstrahls geschlossen werden kann.

Die Messdaten werden an eine Auswertungseinheit 47 weitergeleitet, die aus den aufgezeichneten Messdaten den zweidimensionalen Strahlfleck 37 rekonstruiert. Mit einer rotierbaren Vieldraht-Proportionalkammer 31, wie sie in Fig. 2 und Fig. 3 dargestellt ist, lassen sich Messdaten für eine Vielzahl von Rotationsstellungen - üblicherweise viel mehr Rotationsstellungen als in Fig. 2 und Fig. 3 gezeigt - aufzeichnen. Hierdurch lässt sich die Projektion des Strahlflecks 37 auf einer Vielzahl von Richtungen ermitteln und hieraus wiederum in genauer Weise die zweidimensionale Verteilung des Strahlflecks 37 rekonstruieren.

Die Rotation der Vieldraht-Proportionalkammer 31 und die Steuerung der Aufzeichnung der Messdaten wird von einer Steuerungseinheit 49 übernommen. Wie hier dargestellt, können die Auswertungseinheit 47 und die Steuerungseinheit 49 in einer einzigen Einheit 51 implementiert sein. Dies ist aber nicht zwangsläufig notwendig. Ebenso können die Steuerungseinheit 49 und/oder die Auswertungseinheit 47 z.B. in einer Steuerungseinheit für die Partikeltherapieanlage 10 integriert sein, so dass sich eine Synchronisation zwischen der Steuerungseinheit 49 für die Vieldraht-Proportionalkammer 31 und der Steuerungseinheit für die Partikeltherapieanlage 10 auf einfache Weise implementieren lässt.

Die Vieldraht-Proportionalkammer 31 kann dabei beispielsweise in das Isozentrum 23 in einem Bestrahlungsraum 19 gestellt werden und dort mit dem Partikelstrahl bestrahlt werden. Es ist auch denkbar, eine Vieldraht-Proportionalkammer 31, die sich z.B. in einer Strahlapplikationsvorrichtung (auch BAMS genannt, für BAMS: "beam application and monitoring system") befindet, welche Strahlapplikationsvorrichtung sich üblicherweise am Ende des Hochenergiestrahl-Transportsystems 17 im Bereich des Strahlauslasses befindet, so auszugestalten, dass die Vieldraht-Proportionalkammer 31 in der BAMS rotierbar ist.

Aus den aufgezeichneten Projektionen kann mit bekannten Verfahren wie beispielsweise der gefilterten Rückprojektion oder mit Verfahren, bei denen eine zweidimensionale Fourier-Transformation eingesetzt wird, aus den aufgezeichneten Messdaten das Querschnittsprofil des Partikelstrahls ermittelt werden. Derartige Rekonstruktionsverfahren sind beispielsweise für die Computertomographie in dem Buch Buzug, T. "Computed Tomography. From Photon Statistics to Modern Cone-Beam CT", Springer Berlin, 2007, beschrieben. Die Rekonstruktionsalgorithmen können ohne weiteres, ggf. mit geringen Anpassungen, auf die vorliegende Rekonstruktion der Strahlflecks 37 angewendet werden.

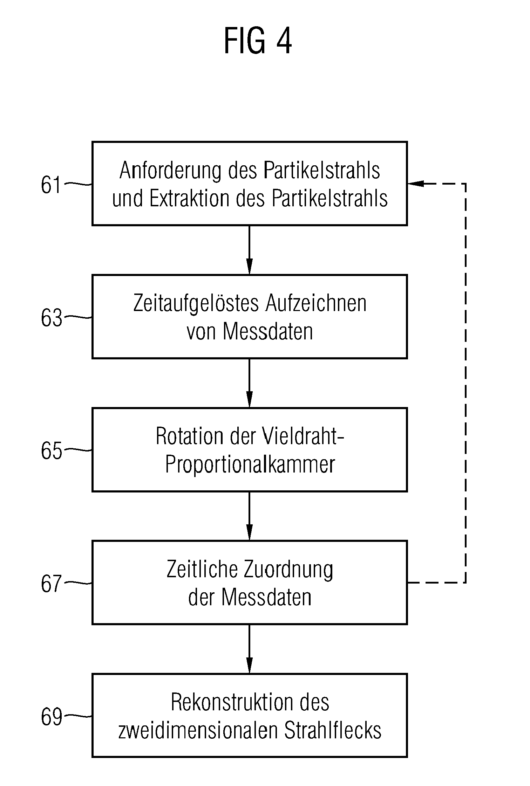

Fig. 4 zeigt eine schematische Übersicht von Verfahrensschritten einer Ausführungsform des Verfahrens.

Zu Beginn wird ein Partikelstrahl aus einer Beschleunigereinheit angefordert, d.h. basierend auf einem Anforderungssignal wird ein Partikelstrahl mit bestimmten Spezifikationen aus der Beschleunigereinheit extrahiert (Schritt 61). Die Extraktion des Partikelstrahls aus der Beschleunigereinheit dauert üblicherweise mehrere Sekunden. Das Anforderungssignal des Partikelstrahls triggert ebenso die Aufzeichnung von Messdaten mit der Vieldraht-Proportionalkammer (Schritt 63). Während der Aufzeichnung der Messdaten wird die Vieldraht-Proportionalkammer wie in Fig. 2 und Fig. 3 angedeutet rotiert (Schritt 65). Die aufgezeichneten Messdaten erhalten ebenfalls einen Zeitstempel (Schritt 67), um die Messdaten zeitlich zuordnen zu können und um damit die Messdaten mit dem Verlauf der Extraktion des Partikelstrahls korrelieren zu können.

Falls aus den aufgezeichneten Messdaten der Strahlfleck noch nicht zeitaufgelöst rekonstruiert werden kann - da beispielsweise noch Messdaten für bestimmte Projektionen fehlen -, wird erneut ein Partikelstrahl mit den gleichen Spezifikationen angefordert und die Aufzeichnung der Messdaten unter geeigneter Rotation der Vieldraht-Proportionalkammer solange wiederholt, bis für jeden Zeitpunkt während der Extraktion die notwendigen Projektionen zur Rekonstruktion des Strahlflecks aufgezeichnet wurden. Anschließend wird die zweidimensionale Verteilung des Strahlflecks zeitaufgelöst rekonstruiert (Schritt 69).

## Patentansprüche

1. Vorrichtung zur Vermessung eines Strahlflecks (37) eines Partikelstrahls, umfassend
- eine Einrichtung (31, 49), mit der Projektionen des Strahlflecks (37) auf eine Vielzahl von Richtungen (38, 40, 42, 44) erfassbar sind, und
- eine Auswertungseinheit (47), mit der aus den erfassten Projektionen ein zweidimensionales Querschnittsprofil des Partikelstrahls rekonstruierbar ist.

2. Vorrichtung nach Anspruch 1,
wobei die Richtungen im Wesentlichen senkrecht zu einer Verlaufsrichtung des Partikelstrahls stehen.

3. Vorrichtung nach Anspruch 1 oder 2,
wobei die Einrichtung (31, 49) derart ausgebildet ist, dass die Projektionen des Strahlflecks (37) zeitaufgelöst erfassbar sind.

4. Vorrichtung nach einem der Ansprüche 1 bis 3,
wobei die Einrichtung (31, 49) um die Strahlverlaufsrichtung drehbar gelagert ist.

5. Vorrichtung nach einem der Ansprüche 1 bis 4,
wobei die Einrichtung (31, 49) als Drahtkammer oder als Streifenkammer ausgebildet ist.

6. Anlage zur Erzeugung eines Partikelstrahls
mit einer Vorrichtung zur Vermessung eines Strahlflecks (37) eines Partikelstrahls nach einem der Ansprüche 1 bis 5.

7. Anlage nach Anspruch 6,
welche eine Steuervorrichtung aufweist, mit der eine Steuerung einer Erzeugung des Partikelstrahls mit einer Steuerung der Vorrichtung zur Vermessung eines Strahlflecks (37) eines Partikelstrahls zeitlich synchronisierbar ist.

8. Anlage nach Anspruch 6 oder 7,
wobei die Anlage als Partikeltherapieanlage (10) ausgebildet ist.

9. Verfahren zur Vermessung eines Strahlflecks (37) eines Partikelstrahls, umfassend folgende Schritte:
- Erfassen von Projektionen des Strahlflecks (37) auf eine Vielzahl von Richtungen (38, 40, 42, 44) und
- Rekonstruieren eines zweidimensionalen Querschnittsprofils des Partikelstrahls aus den erfassten Projektionen.

10. Verfahren nach Anspruch 9,
wobei die Richtungen im Wesentlichen senkrecht zu einer Verlaufsrichtung des Partikelstrahls stehen.

11. Verfahren nach Anspruch 9 oder 10,
wobei die Projektionen zeitaufgelöst erfasst werden.

12. Verfahren nach einem der Ansprüche 9 bis 11,
wobei die Projektionen mit einer um die Strahlverlaufsrichtung drehbar gelagerten Einrichtung (31), insbesondere mit einer Drahtkammer oder Streifenkammer, erfasst werden.

13. Verfahren nach einem der Ansprüche 9 bis 12,
wobei die Erfassung der Projektionen zeitlich mit einer Anforderung des Partikelstrahls und/oder mit einem Verlauf einer Bestrahlung mit dem Partikelstrahl abgestimmt ist.
